(19) Europäisches Patentamt

European Patent Office

Office européen des brevets

(11) EP 0 766 433 A1

(12) **DEMANDE DE BREVET EUROPEEN**

(43) Date de publication:
02.04.1997 Bulletin 1997/14

(51) Int Cl.6: **H04L 27/36**, H04L 27/38, H04L 27/20, H04L 27/22

(21) Numéro de dépôt: 96402020.0

(22) Date de dépôt: 24.09.1996

(84) Etats contractants désignés:
BE DE ES FI GB IT SE

(30) Priorité: 27.09.1995 FR 9511315

(71) Demandeur: ALCATEL TELSPACE
92734 Nanterre Cédex (FR)

(72) Inventeur: Janer, Patrick
92300 Levallois Perret (FR)

(74) Mandataire: Scheer, Luc et al
ALCATEL ALSTHOM,
Département de Propriété Industrielle,
30, avenue Kléber
75116 Paris (FR)

(54) **Correction d'un défaut de quadrature d'un modulateur en quadrature et/ou d'un démodulateur de signaux à pluralité d'états de phase**

(57) L'invention concerne un dispositif de correction d'un défaut de quadrature d'un modulateur en quadrature et/ ou d'un démodulateur d'un signal à pluralité d'états de phase ou d'états d'amplitude et de phase.

Le dispositif de correction comporte des moyens de traitement (51) qui, lorsque l'invention est utilisée pour corriger un défaut de quadrature d'un démodulateur, transforment les niveaux P et Q des signaux numériques issus de l'étage de démodulation en des niveaux corrigés P' et Q' selon l'une quelconque des huit relations suivantes :

| P' | P+Q | P+Q | -P-Q | -P-Q | Q-P | P-Q | Q-P | P-Q |
|----|------|------|------|------|------|------|------|------|
| Q' | Q-P | P-Q | Q-P | P-Q | P+Q | P+Q | -P-Q | -P-Q |

Ces niveaux corrigés sont ensuite appliqués, éventuellement après égalisation de leurs niveaux maximums, à des moyens de décision (72).

L'invention allie précision de correction et faible coût et permet de corriger un défaut de quadrature quelconque.

EP 0 766 433 A1

FIG.7

**Description**

Le domaine de l'invention est celui des émetteurs ou récepteurs de signaux à pluralité d'états de phase, obtenus par modulation par déplacement de phase (MDP-M, modulation de phase à M états) ou plus généralement par modulation d'amplitude et de phase (MDAP-M, modulation d'amplitude et de phase à M états).

L'invention concerne plus précisément un dispositif de correction de la constellation d'un signal de type MDAP-M où chaque symbole est déterminé par deux niveaux d'amplitude P et Q portés par deux axes X et Y idéalement en quadrature de phase. L'invention s'applique à la correction d'un défaut de quadrature de phase d'un modulateur ou d'un démodulateur fonctionnant idéalement en quadrature.

Dans le cas d'une modulation à pluralité d'états de phase, par exemple à $2^n$ états de phase, si l'on veut réaliser une représentation de type coordonnées cartésiennes dans un espace de signaux, on peut placer les états de phase de façon équi-répartie par rapport à des axes correspondant à des signaux porteurs orthogonaux X et Y. On obtient alors une constellation qui correspond à la représentation vectorielle des états de signaux porteurs dont les projections sur les axes X et Y donnent les coordonnées de l'extrémité du vecteur représenté.

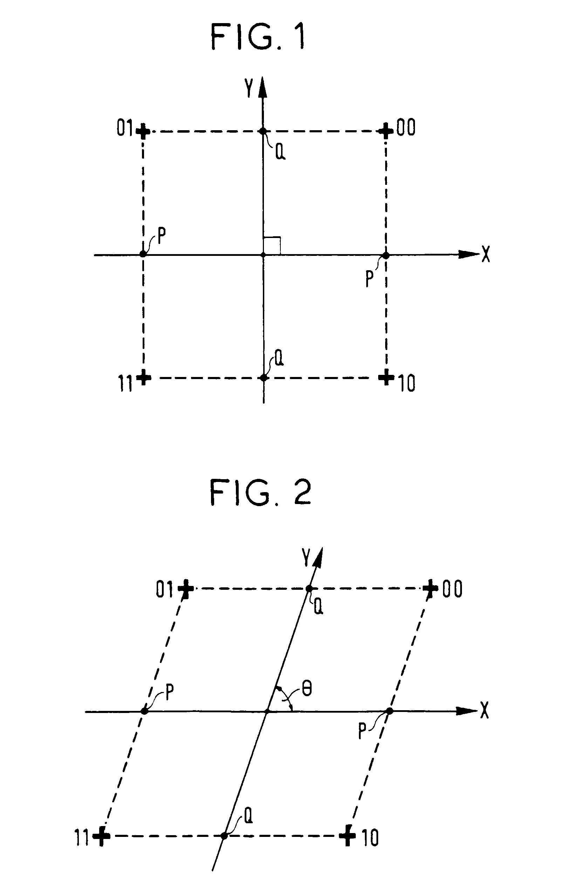

La figure 1 représente une constellation d'un signal de type MDP-4 (modulation de phase à 4 états - QPSK en anglais), cette constellation étant obtenue à partir de deux axes X et Y en quadrature de phase. Les amplitudes des échantillons sont notées P et Q et les symboles correspondants 00, 01, 10 et 11.

La figure 2 représente une constellation d'un signal de type MDP-4 obtenue à partir de deux axes X et Y qui ne sont plus en quadrature de phase ($\Theta \neq 90°$). La constellation est ici déformée et prend l'allure d'un losange.

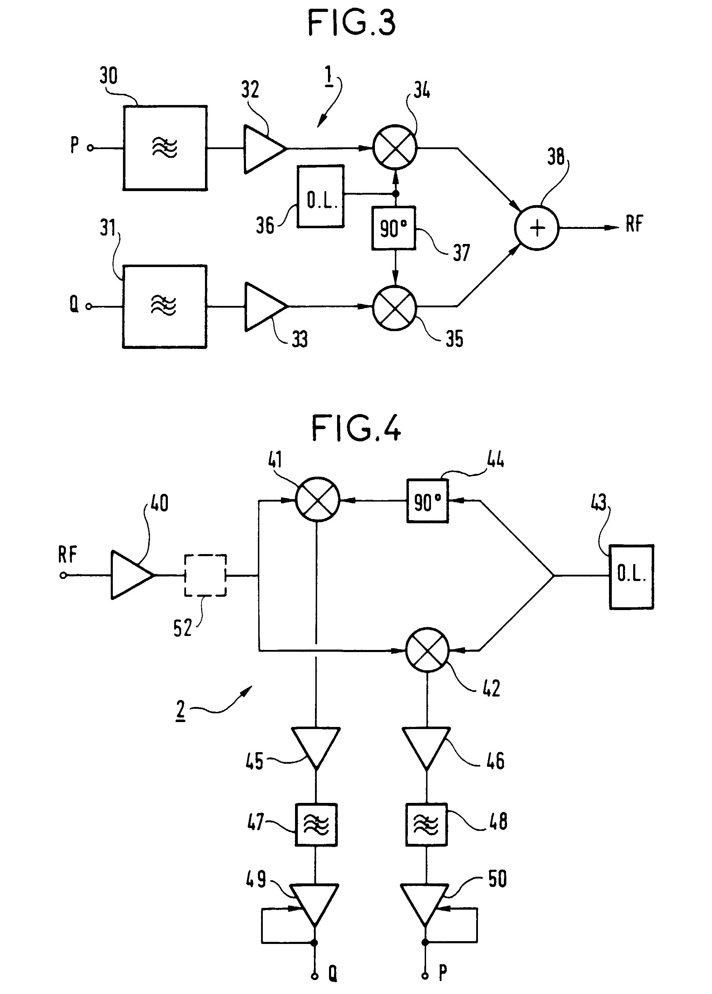

La figure 3 est un schéma synoptique connu d'un étage de modulation 1 d'un émetteur d'un signal de type MDAP-M. Deux trains de signaux analogiques en bande de base P et Q sont appliqués à deux filtres passe-bas 30, 31 suivis chacun d'un amplificateur 32, 33. Les signaux amplifiés sont appliqués à un modulateur de signaux en quadrature comprenant deux mélangeurs 34, 35 recevant des signaux en quadrature de phase d'un oscillateur local 36 et d'un déphaseur de 90° référencé 37. Les signaux de sortie des mélangeurs 34, 35 sont appliqués à un sommateur 38 fournissant un signal RF de type MDAP-M par exemple appliqué à une antenne d'émission (cas d'une modulation directe).

La figure 4 est un schéma synoptique connu d'un étage de démodulation 2 d'un récepteur d'un tel signal RF. Le signal RF reçu est appliqué à un amplificateur faible bruit 40 suivi par deux mélangeurs 41 et 42 recevant des signaux de démodulation d'un oscillateur local 43 et d'un déphaseur de 90° référencé 44. Dans une démodulation FI, l'amplificateur d'entrée 40 (qui n'est dans ce cas plus faible bruit) est suivi par un dispositif de transposition en fréquence intermédiaire, référencé 52 et représenté en traits discontinus. Les signaux issus des mélangeurs 41 et 42 sont des signaux en bande de base. Ces derniers sont appliqués à des amplificateurs 45, 46 suivis de filtres passe-bas 47, 48, eux-même suivis d'amplificateurs à commande automatique de gain (CAG) 49, 50. Les signaux de sortie des amplificateurs 49 et 50 correspondent, en l'absence de perturbations, aux signaux en bande de base P et Q de la figure 3. Ces signaux P et Q constituent, après numérisation, des échantillons permettant de reconstituer les symboles transmis.

Au niveau d'un émetteur d'un signal dont la constellation est déformée conformément à la figure 2 (défaut de quadrature), un défaut de quadrature de phase est assimilable à une diaphonie entre les voies P et Q, ce qui entraîne une dégradation des performances de l'émetteur.

Au niveau d'un récepteur d'un signal à pluralité d'états de phase ou à pluralité d'états d'amplitude et de phase, un défaut de quadrature de phase est également assimilable à une diaphonie entre les voies P et Q et entraîne donc également une dégradation des performances du récepteur.

La dégradation des performances, pour une erreur de quadrature donnée, tant au niveau d'un émetteur que d'un récepteur, est d'autant plus importante que le nombre d'états du signal à pluralité d'états de phase ou à pluralité d'états d'amplitude et de phase est élevé, car la diaphonie due à l'erreur de quadrature rapproche davantage le signal démodulé de la frontière de la zone de décision propre à chaque état.

Il est connu de corriger un défaut de quadrature en intervenant sur les polarisations des mélangeurs, au niveau de l'émetteur ou au niveau du récepteur. De tels dispositifs de correction sont par exemple décrits dans les demandes de brevet FR-A-2.711.027, FR-A-2.641.923 et EP-A-0.614.300.

L'inconvénient des dispositifs connus est qu'ils sont complexes à réaliser et qu'ils font intervenir une boucle de régulation incluant un estimateur de quadrature. La présence d'une boucle de régulation pose de multiples inconvénients : ses paramètres sont à régler en fonction des mélangeurs utilisés (ce qui limite leur interchangeabilité), elle peut être source d'oscillations indésirables à cause de problèmes d'instabilités et sensible aux variations de température.

Par ailleurs, les défauts de quadrature ne peuvent être corrigés que dans une plage restreinte, généralement pour un déphasage $\Theta$ des axes X et Y de l'ordre de 70° (c'est à dire pour un défaut de quadrature $\phi$ de l'ordre de 20°). Ceci nécessite d'utiliser des mélangeurs de bonne qualité et donc coûteux.

La présente invention a pour objectif de pallier ces inconvénients.

Plus précisément, un des objectifs de l'invention est de fournir un dispositif supprimant un défaut de quadrature d'un étage de modulation ou d'un étage de démodulation de signaux à pluralité d'états de phase ou d'états d'amplitude et de phase, ce dispositif ne faisant pas intervenir de boucle de régulation et n'agissant pas sur les mélangeurs.

Un autre objectif de l'invention est de fournir un tel dispositif apte à corriger un défaut de quadrature important, ce qui permet d'utiliser des mélangeurs peu coûteux et de permettre leur totale interchangeabilité.

Un objectif complémentaire est de fournir un tel dispositif qui soit de structure très simple et qui fasse intervenir très peu de composants, et donc peu coûteux.

Ces objectifs, ainsi que d'autres qui apparaîtront par la suite, sont atteints, dans le cas d'un étage de démodulation, grâce à un dispositif de correction d'un défaut de quadrature de cet étage de démodulation. Ce dernier fournit un signal numérique constitué, à chaque temps symbole, par un symbole d'une constellation à pluralités d'états de phase ou d'états d'amplitude et de phase, chaque symbole de la constellation étant déterminé par deux niveaux d'amplitude P et Q issus de l'étage de démodulation. Le dispositif de correction de l'invention comprend des moyens de traitement fournissant, à partir des niveaux d'amplitude P et Q, deux niveaux d'amplitude corrigés P' et Q' indifféremment et respectivement égaux à l'un des couples de valeurs suivants :

- P+Q et Q-P,
- P+Q et P-Q,
- -P-Q et Q-P,
- -P-Q et P-Q,
- Q-P et P+Q,
- P-Q et P+Q,
- Q-P et -P-Q,
- P-Q et -P-Q.

Ces niveaux d'amplitude corrigés peuvent ensuite être appliqués à des moyens de décision.

Dans le cas d'un étage de modulation dont on veut corriger un défaut de quadrature, on utilise un dispositif de correction d'un défaut de quadrature de cet étage de modulation. A ce dernier est appliqué un signal modulant de type numérique constitué, à chaque temps symbole, par un symbole d'une constellation à pluralités d'états de phase ou d'états d'amplitude et de phase. Chaque symbole de la constellation est déterminé par deux niveaux d'amplitude P et Q. Le dispositif de correction de l'invention comprend des moyens de traitement fournissant, à partir des niveaux d'amplitude P et Q, deux niveaux d'amplitude corrigés P' et Q' appliqués à l'étage de modulation, ces niveaux d'amplitude corrigés P' et Q' étant indifféremment et respectivement égaux à l'un des couples de valeurs précités.

Ainsi, l'invention propose d'intervenir directement sur les trains en bande de base en modifiant les valeurs des amplitudes des échantillons, déterminées à chaque temps symbole.

Dans le cas d'une correction d'un défaut de quadrature d'un modulateur, les signaux en bande de base, constituant des signaux modulants de deux signaux porteurs idéalement en quadrature de phase, sont combinés par des opérations linéaires pour fournir des signaux corrigés dont les amplitudes sont en fait portées par des axes fictifs effectivement en parfaite quadrature de phase. Dans le cas d'une correction d'un défaut de quadrature d'un démodulateur, les signaux en bande de base sont ceux issus de l'étage de démodulation et sont combinés d'une quelconque des manières précitées pour fournir des signaux corrigés dont les amplitudes sont également portées par des axes fictifs parfaitement en quadrature de phase.Dans le cas de la correction de quadrature d'un étage de démodulation, les moyens de traitement sont avantageusement précédés de moyens d'amplification à à commande automatique de gain assurant une amplitude égale entre les niveaux maximums des niveaux d'amplitude P et Q.

Avantageusement, ces derniers moyens de traitement sont également suivis de moyens d'amplification à commande automatique de gain assurant une amplitude égale entre les niveaux maximums des niveaux d'amplitude corrigés.

L'invention concerne également un émetteur et un récepteur de signaux à pluralité d'états de phase ou d'états d'amplitude et de phase comprenant de tels moyens de traitement.

D'autres caractéristiques et avantages de l'invention apparaîtront à la lecture de la description suivante de deux modes de réalisation préférentiels, donnés à titre illustratif et non limitatif, et des dessins annexés dans lesquels :

- la figure 1 est une constellation d'un signal de type MDP-4 obtenue à partir de deux axes X et Y en quadrature de phase ;
- la figure 2 représente une constellation d'un signal de type MDP-4 obtenue à partir de deux axes X et Y qui ne sont pas en quadrature de phase ;
- la figure 3 est un schéma synoptique d'un étage de modulation d'un émetteur d'un signal RF de type MDAP-M ;
- la figure 4 est un schéma synoptique d'un étage de démodulation d'un récepteur d'un signal RF émis par un émetteur conforme à la figure 3 ;
- la figure 5 est un schéma synoptique d'un mode de réalisation préférentiel d'un émetteur incluant un dispositif de correction selon l'invention ;

- la figure 6 représente d'une part une constellation d'un signal MDP-4 obtenue à l'aide d'un modulateur présentant un défaut de quadrature, et d'autre part la constellation de ce signal obtenue en associant à ce modulateur le dispositif de correction selon l'invention ;
- la figure 7 est un schéma synoptique d'un mode de réalisation préférentiel d'un récepteur incluant un dispositif de correction selon l'invention ;
- la figure 8 représente d'une part une constellation d'un signal à quatre états de phase obtenue à l'aide d'un démodulateur présentant un défaut de quadrature, et d'autre part la constellation de ce signal obtenue en associant à ce démodulateur le dispositif de correction selon l'invention ;
- la figure 9 est un schéma synoptique d'un mode de réalisation des moyens de traitement selon l'invention ;
- la figure 10 représente une constellation idéale d'un signal MDAP-16 ;
- la figure 11 représente une constellation d'un signal MDAP-16 affectée d'une erreur de quadrature ;
- la figure 12 représente la constellation de la figure 11 après correction de l'erreur de quadrature.

Les figures 1 à 4 ont été décrites précédemment en référence à l'état de la technique.

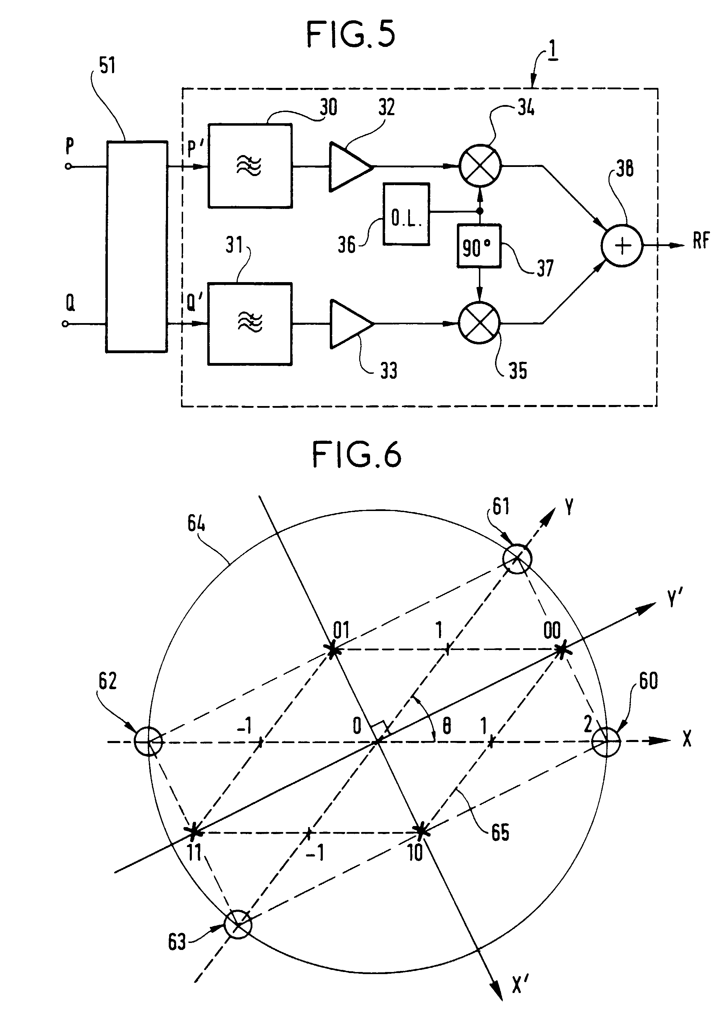

La figure 5 est un schéma synoptique d'un mode de réalisation préférentiel d'un émetteur incluant un dispositif de correction selon l'invention. Le dispositif de correction est référencé 51 et est placé en amont de l'étage de modulation 1, identique à celui de la figure 3. Le dispositif de correction 51 reçoit en entrée les niveaux d'amplitude P et Q correspondant aux signaux à transmettre et fournit, à partir de ces niveaux P et Q, des niveaux d'amplitude corrigés P' et Q' qui sont appliqués à l'étage de modulation 1.

Selon l'invention, les niveaux d'amplitude P' et Q' sont indifféremment égaux aux niveaux d'amplitude figurant dans l'une des huit colonnes du tableau 1.

## TABLEAU 1

|     | 1     | 2     | 3     | 4     | 5     | 6     | 7     | 8     |
| --- | ----- | ----- | ----- | ----- | ----- | ----- | ----- | ----- |
| P'  | P+Q   | P+Q   | -P-Q  | -P-Q  | Q-P   | P-Q   | Q-P   | P-Q   |
| Q'  | Q-P   | P-Q   | Q-P   | P-Q   | P+Q   | P+Q   | -P-Q  | -P-Q  |

A titre d'exemple, si l'on choisit par exemple la colonne 1, P' est égal à P+Q et Q' est égal à Q-P.

On constate que les niveaux d'amplitude corrigés P' et Q' résultent de combinaisons linéaires des niveaux d'amplitude P et Q. La fonction de la transformation de niveau opérée est expliquée au regard de la figure 6 qui représente d'une part une constellation d'un signal à quatre états de phase (MDP-4) obtenue à l'aide d'un modulateur présentant un défaut de quadrature, et d'autre part la constellation corrigée de ce signal obtenue en associant à ce modulateur le dispositif de correction selon l'invention.

Le centre des deux constellations est noté O et les axes X et Y (en traits discontinus) sont les axes porteurs des niveaux d'amplitude des signaux P et Q. Le déphasage $\Theta$ entre les axes X et Y est ici de l'ordre de 50°, soit un défaut de quadrature $\phi$ de l'ordre de 40°. Les symboles de la constellation obtenus en l'absence de correction sont représentés par des croix. Cette constellation est similaire à celle de la figure 2 et a une forme de losange 65. Au symbole 00 correspondent des niveaux d'amplitude (P,Q) égaux à (1,1), au symbole 01 ces niveaux d'amplitude correspondent à (-1,1), au symbole 11 ces niveaux d'amplitude correspondent à (-1,-1) et au symbole 10 ces niveaux d'amplitude correspondent à (1,-1).

A titre d'exemple, on considère que le dispositif 51 de la figure 5 fournit respectivement P' = P+Q et Q' = Q-P. En considérant le premier quadrant, P' est égal à 1+1 = 2 (reporté sur l'axe X) et Q' est égal à 1-1 = 0. Le symbole corrigé correspondant est donc situé sur l'axe X avec une valeur d'amplitude de 2. Il est référencé 60 et représenté par un cercle. En considérant le second quadrant, P et Q valent respectivement -1 et 1, c'est à dire que P' et Q' valent respectivement 0 et 2. On obtient ainsi le symbole corrigé 61 porté par l'axe Y. En répétant cette opération pour les deux autres quadrants, on génère les symboles corrigés 62 et 63.

L'invention trouve toute son originalité dans ce traitement qui permet d'obtenir des symboles d'une nouvelle constellation 64 (en traits continus) référencée par rapport à deux nouveaux axes fictifs X' et Y' qui sont en quadrature de phase. Les symboles corrigés 60 à 63 sont tous à la même distance du centre O de la constellation et le défaut de quadrature a été compensé par le simple remplacement de P et Q par P' = P+Q et Q' = Q-P.

L'exemple précédent a été donné pour un signal de type MDP-4 mais l'invention s'applique tout aussi bien aux modulations de phase à nombre d'états plus élevé, ainsi qu'aux modulations de type MAQ (MDAP-M en français), quel que soit leur nombre d'état, comme il sera vu par la suite.

On notera deux conséquences de cette correction :

- la correction introduit une modulation d'amplitude à l'émission (les symboles sont ici plus proches de l'axe Y' que de l'axe X'). Dès lors qu'un défaut de quadrature existe, la correction apportée par le dispositif de l'invention introduit nécessairement une modulation d'amplitude, d'autant plus forte que le défaut de quadrature $\phi$ à corriger est important. Ce point n'est cependant pas critique dans la mesure où lorsque l'erreur de quadrature est faible (notamment inférieure à 5°), la perte d'énergie sur l'un des signaux modulés (porteuse ou fréquence FI), qui est constante, est inférieure à 0,8 dB par rapport au signal modulé sur l'axe en quadrature. La dégradation de taux d'erreurs binaire qui en résulterait pour un même niveau moyen de signal par rapport à une constellation conventionnelle est alors limitée à un facteur 1,5 environ ;
- la correction introduit une rotation de la constellation (ici négative car $\Theta$ est inférieur à 90°). Cette rotation n'est pas gênante car, à la réception, le dispositif de récupération de porteuse assurera la synchronisation nécessaire.

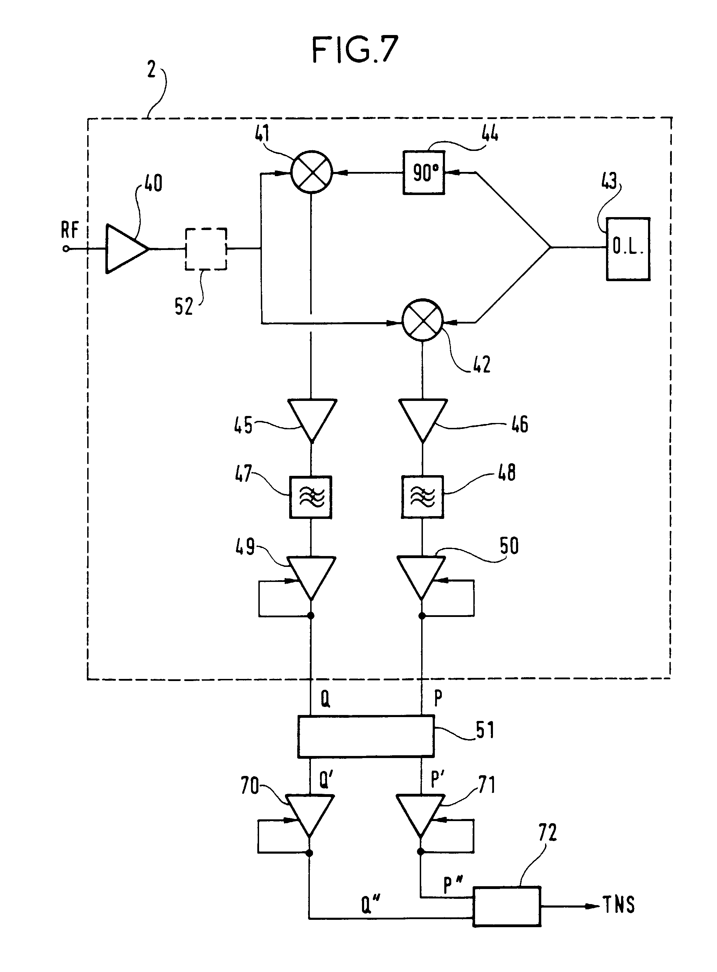

La figure 7 est un schéma synoptique d'un mode de réalisation préférentiel d'un récepteur incluant un dispositif de correction selon l'invention.

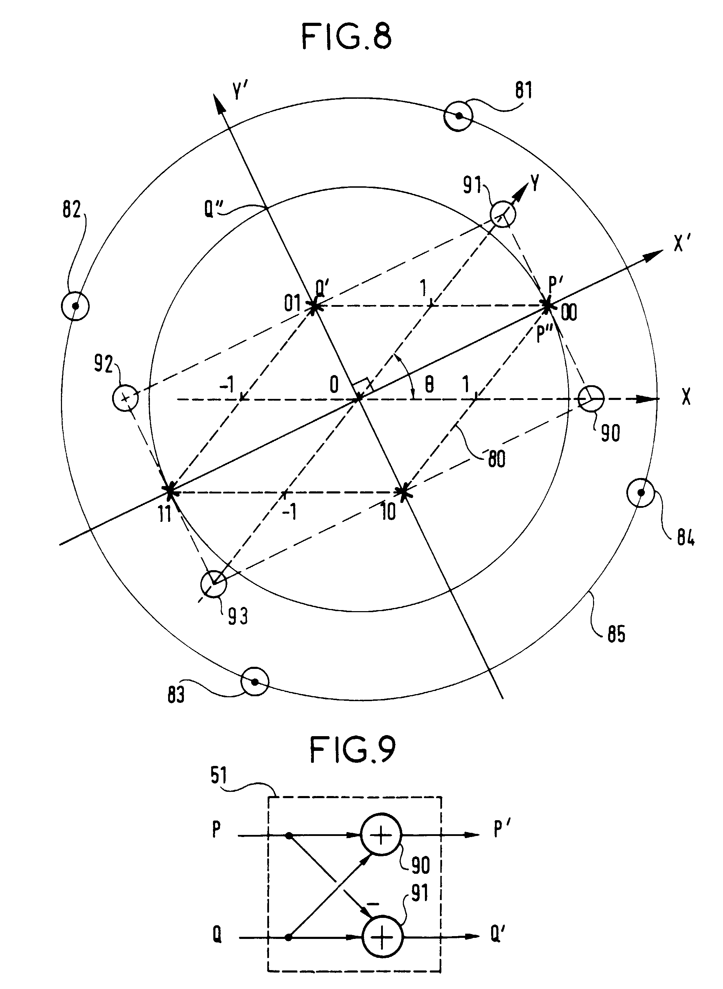

Le récepteur représenté comporte l'étage de démodulation 2 de la figure 4 et fournit les niveaux d'amplitude P et Q en bande de base au dispositif de correction 51 selon l'invention. Ce dispositif 51 est par exemple identique à celui utilisé au niveau de l'émetteur correspondant du signal RF et fournit des niveaux corrigés P' = P+Q et Q' = Q-P. Toute autre combinaison de P et Q selon l'une des colonnes du tableau 1 est possible. Les niveaux d'amplitude corrigés P' et Q' fournis par le dispositif de correction permettent d'obtenir une constellation définie selon deux axes fictifs X' et Y' en quadrature de phase, conformément à la figure 8.

La figure 8 représente d'une part une constellation d'un signal MDP-4 obtenue à l'aide d'un démodulateur présentant un défaut de quadrature, et d'autre part la constellation de ce signal obtenue en associant le dispositif de correction selon l'invention à ce démodulateur.

De même que sur la figure 6 décrite précédemment, les symboles constituant la constellation issue du démodulateur 2 présentant un défaut de quadrature sont représentés par des croix. La constellation est référencée 80 et a une forme de losange. Les niveaux d'amplitude P et Q sont ici égaux et les axes X et Y sont sécants avec un angle $\Theta$ proche de 50° ($\phi \approx 40°$).

Ainsi, en considérant tout d'abord le symbole 00 de la constellation non corrigée, ses coordonnées sont (1,1). Les valeurs de ses coordonnées après correction valent donc : sur l'axe X, P' = P+Q= 2 et sur l'axe Y, Q' = Q-P = 0. Le symbole 00 de la constellation corrigée est référencé 90. Le même raisonnement peut être appliqué aux trois autres symboles pour obtenir les symboles corrigés 91 à 93. On définit ainsi deux nouveaux axes fictifs X' et Y' en quadrature de phase et porteurs des échantillons ayant les valeurs corrigées P' et Q'. On a donc bien corrigé le défaut de quadrature introduit par le démodulateur.

On constate cependant que l'on a également ici une compression de la constellation, due à une différence d'amplitude entre les niveaux P' et Q'. L'invention propose alors, afin de récupérer une constellation de symboles équirépartis par rapport à l'origine O, d'appliquer les niveaux d'amplitude corrigés P' et Q' à des moyens d'amplification 70, 71 (Fig.7) à commande automatique de gain (CAG) assurant une amplitude égale entre les niveaux maximums des niveaux d'amplitude corrigés P' et Q'.

La dynamique de ces moyens d'amplification 70, 71 est au moins égale à la différence d'amplitude attendue entre les niveaux d'amplitude corrigés P' et Q' et dépend donc de l'erreur maximale de quadrature à corriger.

La dynamique des CAG 70 et 71 dépend de la correction maximale à apporter, en fonction du tableau suivant qui exprime l'écart d'amplitude en dB en fonction de l'erreur de quadrature $\phi$, exprimée en degrés.

| $\phi$(°) | 0 | 1 | 2 | 5 | 10 | 20 | 30 | 45 | 60 | 80 | 90 |
|---|---|---|---|---|---|---|---|---|---|---|---|
| -20log(X'/Y') | 0 | 0,15 | 0,30 | 0,76 | 1,52 | 3,10 | 4,77 | 7,66 | 11,44 | 21,16 | $\infty$ |

La rapidité d'action des CAG 70 et 71 doit être lente par rapport au débit symbolique transmis, afin d'éviter qu'elles ne réagissent aux variations d'amplitude associées aux modulations de type MDAP-M, ou, plus généralement au filtrage passe-bas 47, 48 effectué en amont (cas du MDP-M et du MDAP-M).

Ainsi, comme montré sur la figure 8, le niveau P' est par exemple maintenu constant (P' est ici égal à P"), alors que le niveau Q' est amené à un niveau Q" de même niveau que le niveau P'. Ces niveaux d'amplitude P" et Q" constituent, après échantillonnage, des échantillons permettant de définir un nouveau symbole corrigé 81 correspondant au symbole 91. Les autres symboles sont référencés 82 à 84 (correspondant respectivement aux symboles 92, 93 et 90) et la constellation est placée sur un cercle 85.

La description précédente concerne un traitement de niveaux P et Q de type analogique. Dans ce cas, les niveaux corrigés P' et Q' peuvent être par exemple obtenus à l'aide d'un dispositif conforme à la figure 9 qui est un schéma synoptique d'un mode de réalisation des moyens de traitement 51 selon l'invention.

Les moyens de traitement représentés fournissent P' = P+Q et Q' = Q-P. Ils font appel à un additionneur 90 et à un soustracteur 91 qui sont par exemple réalisés à base d'amplificateurs opérationnels. Une manière élégante de réaliser ce traitement consiste à utiliser les amplificateurs opérationnels 70 et 71 constituant des amplificateurs à commande automatique de gain et fournissant directement les niveaux P" et Q".

Un traitement des niveaux P et Q en numérique sera cependant préféré, afin notamment de pouvoir réaliser un modem entièrement numérique. Dans ce cas, on prévoira, au niveau de l'émetteur, une conversion numérique/analogique avant transposition de fréquence et, au niveau du récepteur, une conversion analogique/numérique en aval de la transposition de fréquence. Dans ce cas, les calculs de P' et Q' à partir de P et Q sont réalisés à l'aide de moyens numériques.

Les niveaux P' et Q' peuvent être appliqués à des moyens de décision des valeurs des symboles reçus. La décision peut être une décision directe. Dans le cas d'un traitement numérique, on réalise sous forme numérique les moyens d'amplification 70 et 71 en aval des moyens de traitement 51 et les niveaux P" et Q" sont appliqués à ces moyens de décision (référencés 72 sur la figure 7 et fournissant des trains numérique de sortie TNS).

Les moyens de traitement 51 sont avantageusement précédés de moyens d'amplification 49, 50 à commande automatique de gain assurant une amplitude égale entre les niveaux maximums des niveaux d'amplitude P et Q. Ces moyens d'amplification 49, 50 sont par exemple constitués par les amplificateurs à commande automatique de gain (CAG) précités en référence à la figure 4. On assure ainsi une compensation des défauts du démodulateur, surtout dans le cas d'une démodulation directe, c'est à dire sans utilisation de fréquence intermédiaire.

A titre indicatif, que ce soit dans le cas d'une démodulation directe ou d'une démodulation FI, la dynamique des CAG 49 et 50 peut être de l'ordre de quelques dB, par exemple 10 dB.

Bien entendu, toutes les valeurs de P' et Q' données dans le tableau 1 conviennent pour corriger l'erreur de quadrature, que ce soit à l'émission et/ou à la réception. On notera que les colonnes 5 à 8 sont complémentaires des colonnes 1 à 4, les constellations résultantes étant dans ce cas complémentaires de celles obtenues pour les colonnes 1 à 4 (permutation des axes X et Y). De manière générale, il suffira, en fonction du traitement choisi, de compenser les valeurs décidées lors de l'opération de décision (c'est à dire lorsqu'un symbole est associé à une valeur binaire) opérée dans les moyens de décision 72.

Le traitement du signal réalisé dans la présente invention peut mathématiquement s'exprimer par les opérations suivantes, en considérant que P' = P+Q et que Q' = Q-P :

L'équivalent en bande de base du signal transmis dans le cas idéal (quadrature parfaite) et sans transformation s'écrit P+j.Q avec (P,Q) le symbole bi-dimensionnel transmis à un instant donné et j exprime la rotation de $\pi/2$.

Dans le cas le plus général, pour une erreur de quadrature égale à $\phi$, le signal transformé s'écrit :

$$(P+Q) + e^{j(\pi/2 - \phi)}.(Q-P) \text{ ou encore } (P+Q) + j.e^{-j\phi}.(Q-P)$$

On obtient alors l'expression :

$$e^{-j\phi/2}.[(P+Q).e^{j\phi/2} + j.(Q-P)e^{-j\phi/2}]$$

En regroupant les termes en P et en Q on a donc :

$$e^{-j\phi/2}.[P.(e^{j\phi/2} - j.e^{-j\phi/2}) + Q.(e^{j\phi/2} + j.e^{-j\phi/2})]$$

Or, comme :

$$e^{j\phi/2} = \cos(\phi/2) + j.\sin(\phi/2)$$

et

$$e^{-j\phi/2} = \cos(\phi/2) - j.\sin(\phi/2)$$

on obtient pour le signal transmis l'expression suivante :

$$e^{-j\phi/2}.\{P[\cos(\phi/2) + j.\sin(\phi/2) - j.\cos(\phi/2) - \sin(\phi/2)]$$

$$+ Q[\cos(\phi/2) + j.\sin(\phi/2) + j.\cos(\phi/2) + \sin(\phi/2)]\}$$

ce qui permet de faire apparaître, pour P un facteur (1-j) représentant une rotation de $-\pi/4$ et, pour Q, un facteur (1+j) qui représente une rotation de $+\pi/4$ :

$$e^{-j\phi/2}.\{P.(1-j).[\cos(\phi/2) - \sin(\phi/2)] + Q.(1+j).[\cos(\phi/2) + \sin(\phi/2)]\}$$

$$= \sqrt{2}.P.[e^{-j(\pi/4 + \phi/2)}. (\cos(\phi/2) - \sin(\phi/2))]$$

$$+ \sqrt{2}.Q.[e^{-j(-\pi/4 + \phi/2)}. (\cos(\phi/2) + \sin(\phi/2))]$$

Cette expression montre :

- une rotation de la constellation d'un angle égal à $-(\phi/2+\pi/4)$ ; la détection de P et Q, sans interférence inter-symboles, est possible sur deux axes orthogonaux, décalés, par rapport à X, de $-(\phi/2+\pi/4$ et $-(\phi/2-\pi/4)$ respectivement,
- une différence d'amplitude entre les signaux détectés sur chaque axe, exprimée par les termes $\cos(\phi/2)-\sin(\phi/2)$ sur l'axe X' et $\cos(\phi/2)+\sin(\phi/2)$ sur l'axe Y'.

On notera que si l'erreur de quadrature est nulle ($\phi = 0$), la variation d'amplitude disparaît ; en effet, dans ce cas $\cos(\phi/2) = 1$, $\sin(\phi/2) = 0$ et $tg(\phi/2) = 0$. La transformation opérée se réduit alors à une simple rotation de $\pi/4$ de la constellation.

Il est à noter que le dispositif de l'invention s'applique aux démodulations synchrones ou non synchrones. Au niveau réception, il est notamment indépendant du rapport signal à bruit de la liaison (et particulièrement du fading) et de la récupération de rythme. Il est à noter qu'aucune boucle de contre-réaction n'est nécessaire, ce qui permet de remédier aux inconvénients évoqués dans la description de l'état de la technique.

Des simulations ont montré qu'un déphasage $\Theta$ de l'ordre de 10° entre les axes X et Y peut être corrigé sans aucun problème, contrairement aux dispositifs de correction de l'état de la technique qui ne permettent une correction de quadrature que pour un angle $\Theta$ proche de 70°.

L'invention s'applique à toutes les modulations numériques dont la constellation est idéalement supportée par deux axes en quadrature, et en particulier à toutes les modulations numériques à $2^n$ états de phase, qu'elles soient d'amplitude et de phase (MDAP-M, avec M valant par exemple 4, 16 ou plus), ainsi qu'à toutes les modulations à codage en treillis, que le nombre de points de la constellation soit ou non égal à une puissance de 2. Sur ce dernier point, l'invention s'applique notamment aux modulations codées en treillis à 96 ou à 192 états. Elle s'applique également à toutes les modulations à réponse partielle (QPRS), par exemple à 9, 25, 49, ou 225 états.

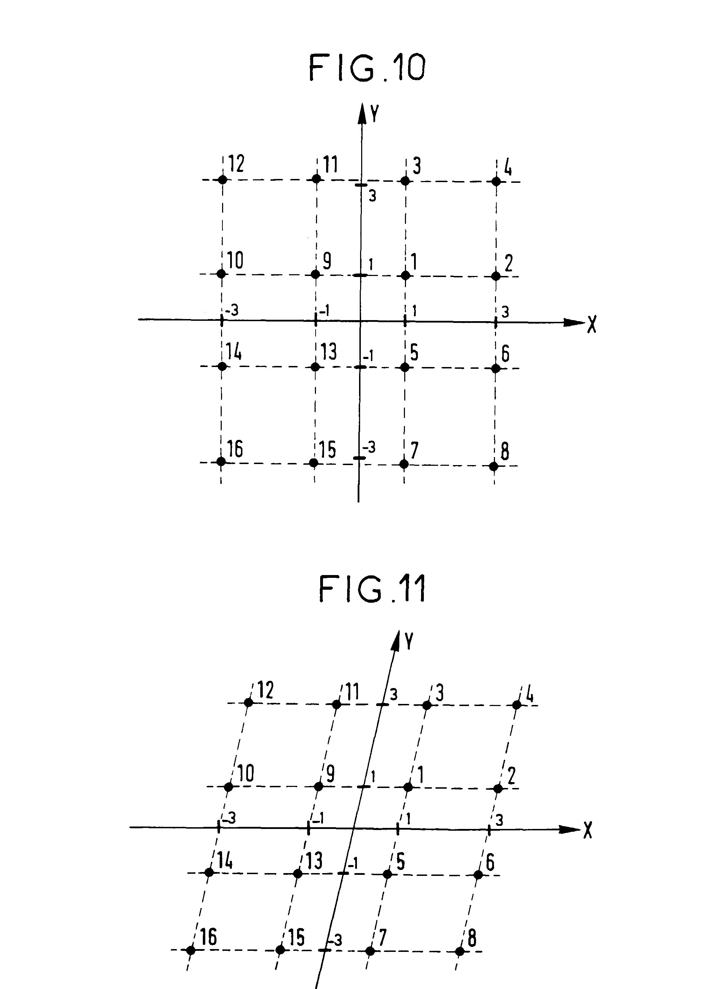

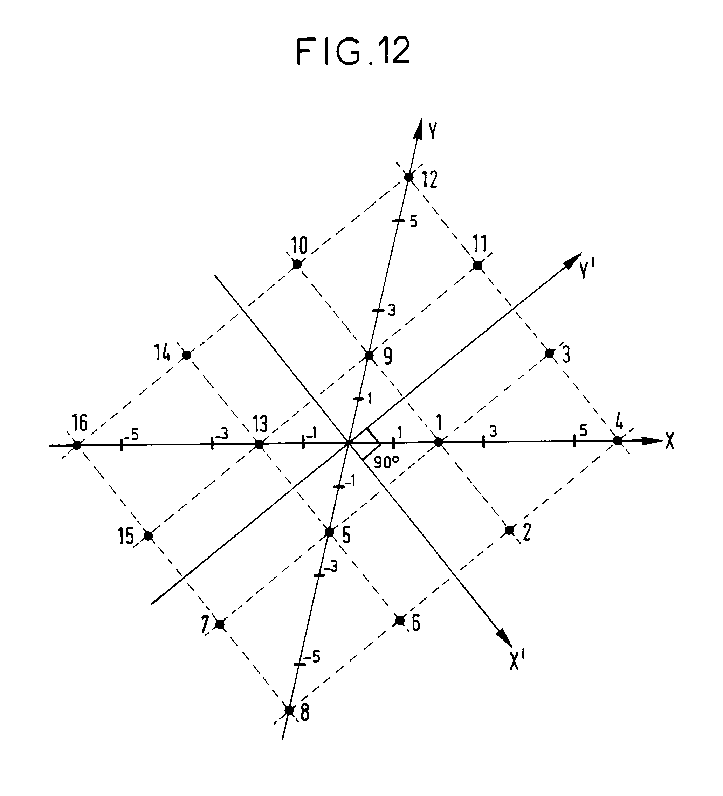

A titre illustratif, les figures 10, 11 et 12 représentent respectivement une constellation idéale d'un signal MDAP-16, une constellation d'un signal MDAP-16 affectée d'une erreur de quadrature et la constellation de la figure 11 après correction de l'erreur de quadrature.

Le tableau suivant donne les coordonnées des symboles référencés sur ces figures avant et après correction de quadrature par les opérations P'=P+Q et Q'=Q-P.

| Symbole | (P ; Q) | (P' ; Q') |
|---------|---------|-----------|
| 1 | (+1 ; +1) | (+2 ; 0) |
| 2 | (+3 ; +1) | (+4 ; -2) |
| 3 | (+1 ; +3) | (+4 ; +2) |
| 4 | (+3 ; +3) | (+6 ; 0) |
| 5 | (+1 ; -1) | (0 ; -2) |
| 6 | (+3 ; -1) | (+2 ; -4) |
| 7 | (+1 ; -3) | (-2 ; -4) |
| 8 | (+3 ; -3) | (0 ; -6) |

(suite)

| Symbole | (P ; Q) | (P' ; Q') |
|---------|---------|-----------|
| 9 | -(1 ; +1) | (0 ; +2) |
| 10 | -(3 ; +1) | (-2 ; +4) |
| 11 | -(1 ; +3) | (+2 ; +4) |
| 12 | -(3 ; +3) | (0 ; +6) |
| 13 | -(1 ; -1) | (-2 ; 0) |
| 14 | -(3 ; -1) | (-4 ; +2) |
| 15 | -(1 ; -3) | (-4 ; -2) |
| 16 | -(3 ; -3) | (-6 ; 0) |

**Revendications**

1. Dispositif de correction d'un défaut de quadrature d'un étage de démodulation (2) fournissant un signal numérique constitué, à chaque temps symbole, par un symbole d'une constellation à pluralités d'états de phase ou d'états d'amplitude et de phase, chaque symbole de ladite constellation étant déterminé par deux niveaux d'amplitude P et Q issus dudit étage de démodulation (2),
caractérisé en ce qu'il comprend des moyens de traitement (51) fournissant, à partir desdits niveaux d'amplitude P et Q, deux niveaux d'amplitude corrigés P' et Q', lesdits niveaux d'amplitude corrigés P' et Q' étant indifféremment et respectivement égaux à l'un des couples de valeurs suivants :

   - P+Q et Q-P,
   - P+Q et P-Q,
   - -P-Q et Q-P,
   - -P-Q et P-Q,
   - Q-P et P+Q,
   - P-Q et P+Q,
   - Q-P et -P-Q,
   - P-Q et -P-Q,

2. Dispositif de correction d'un défaut de quadrature d'un étage de modulation (1) auquel est appliqué un signal modulant de type numérique et constitué, à chaque temps symbole, par un symbole d'une constellation à pluralités d'états de phase ou d'états d'amplitude et de phase, chaque symbole de ladite constellation étant déterminé par deux niveaux d'amplitude P et Q,
caractérisé en ce qu'il comprend des moyens de traitement (51) fournissant, à partir desdits niveaux d'amplitude P et Q, deux niveaux d'amplitude corrigés P' et Q' appliqués audit étage de modulation (1), lesdits niveaux d'amplitude corrigés P' et Q' étant indifféremment et respectivement égaux à l'un des couples de valeurs suivants :

   - P+Q et Q-P,
   - P+Q et P-Q,
   - -P-Q et Q-P,
   - -P-Q et P-Q,
   - Q-P et P+Q,
   - P-Q et P+Q,
   - Q-P et -P-Q,
   - P-Q et -P-Q.

3. Dispositif selon la revendication 1, caractérisé en ce que lesdits niveaux d'amplitude corrigés sont appliqués à des moyens de décision.

4. Dispositif selon l'une des revendications 1 et 3, caractérisé en ce que lesdits moyens de traitement (51) sont précédés de moyens d'amplification (49, 50) à commande automatique de gain assurant une amplitude égale entre les niveaux maximums desdits niveaux d'amplitude P et Q.

5.  Dispositif selon l'une des revendications 1, 3 et 4, caractérisé en ce que lesdits moyens de traitement (51) sont suivis de moyens d'amplification (70, 71) à commande automatique de gain assurant une amplitude égale entre les niveaux maximums desdits niveaux d'amplitude corrigés P' et Q'.

6.  Récepteur de signaux à pluralités d'états de phase ou d'états d'amplitude et de phase, caractérisé en ce qu'il comporte un dispositif selon l'une des revendications 1, 3, 4 et 5.

7.  Emetteur de signaux à pluralités d'états de phase ou d'états d'amplitude et de phase, caractérisé en ce qu'il comporte un dispositif selon la revendication 2.

# FIG. 1

# FIG. 2

# FIG.3

# FIG.4

# FIG.5

# FIG.6

# FIG.7

EP 0 766 433 A1

# FIG.8

# FIG.9

# FIG.10

# FIG.11

# FIG.12

**Office européen des brevets**

**RAPPORT DE RECHERCHE EUROPEENNE**

Numero de la demande

EP 96 40 2020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 111 155 A (KEATE ET AL.) 5 Mai 1992<br>* abrégé; figures 4-6 *<br>* colonne 2, ligne 43 - ligne 61 *<br>* colonne 3, ligne 16 - ligne 30 *<br>--- | 1-7 | H04L27/36<br>H04L27/38<br>H04L27/20<br>H04L27/22 |
| X | EP 0 647 031 A (ETA FABRIQUES D'EBAUCHES) 5 Avril 1995<br>* colonne 3, ligne 32 - ligne 38 *<br>--- | 1-7 | |
| A | EP 0 503 588 A (NTT) 16 Septembre 1992<br>* abrégé; figures 5,12 *<br>--- | 1-7 | |
| A | ELECTRONICS AND COMMUNICATIONS IN JAPAN, PART I, COMMUNICATIONS,<br>vol. 75, no. 11, Novembre 1992,<br>pages 47-58, XP000368546<br>HIROSHI SUZUKI & HITOSHI YOSHINO: "Affine transformations for compensating linear distortion: an application to linear signaling in mobile radio"<br>* page 47, colonne de gauche, alinéa 2 *<br>* page 48, colonne de droite, alinéa 2 *<br>--- | 1-7 | |
| A | ELECTRONICS LETTERS,<br>vol. 27, no. 3, 31 Janvier 1991, STEVENAGE GB,<br>pages 214-216, XP000208257<br>FAULKNER ET AL.: "Automatic adjustment of quadrature modulators"<br>* le document en entier *<br>--- | 1-7 | |
| A | EP 0 570 979 A (NEC) 24 Novembre 1993<br>* abrégé; figure 3 *<br>----- | 1-7 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 22 Janvier 1997 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)